# EUROPÄISCHE PATENTSCHRIFT

(11) **EP 0 588 830 B1**
(45) Veröffentlichungstag und Bekanntmachung des Hinweises auf die Patenterteilung: **22.03.1995**
(21) Anmeldenummer: 92910762.1
(22) Anmeldetag: 27.05.1992
(51) Int. Cl.: G01C 11/00, G01C 15/00

(54) **VERFAHREN UND VORRICHTUNG ZUR VERMESSUNG UND DOKUMENTATION DER GEOMETRIE, STRUKTUR- UND MATERIALBESCHAFFENHEIT VON DREIDIMENSIONALEN OBJEKTEN, WIE FASSADEN UND RÄUMEN SOWIE DEREN WÄNDE, EINRICHTUNGEN UND INSTALLATIONEN**
METHOD AND DEVICE FOR SURVEYING AND DOCUMENTING THE GEOMETRY AND STRUCTURE OF THREE-DIMENSIONAL OBJECTS SUCH AS FACADES AND ENCLOSED SPACES, AND THEIR WALLS, FURNISHINGS AND FITTINGS AS WELL AS THE NATURE OF THE MATERIALS OF WHICH SUCH OBJECTS ARE MADE
PROCEDE ET DISPOSITIF POUR MESURER ET CARACTERISER DES OBJETS EN TROIS DIMENSIONS, TELS QUE FACADES, LOCAUX, AINSI QUE LEUR MURS, AMENAGEMENTS ET INSTALLATIONS, DU POINT DE VUE DE LEUR GEOMETRIE, DE LEUR STRUCTURE ET DE LA NATURE DE LEURS MATERIAUX

(30) Priorität: 11.06.1991 DE 4119180
(43) Veröffentlichungstag der Anmeldung: 30.03.1994
(73) Patentinhaber: MERKEL, Peter, D-64673 Zwingenberg (DE)
(72) Erfinder: MERKEL, Peter, D-64673 Zwingenberg (DE)
(74) Vertreter: Ratzel, Gerhard, Dr.
(86) Internationale Anmeldenummer: DE9200430
(87) Internationale Veröffentlichungsnummer: WO9222786

(56) Entgegenhaltungen:
- WO-A-89/10538
- DE-A- 3 726 065
- FR-A- 2 378 260
- US-A- 4 396 942

## Beschreibung

Die Erfindung betrifft ein Verfahren und eine Vorrichtung zur Vermessung und Dokumentation der Geometrie, Struktur- und Materialbeschaffenheit von dreidimensionalen Objekten, wie Fassaden und Räume sowie deren Wände, Einrichtungen und Installationen.

Im Zuge der Einführung von Objektmanagementsystemen gibt es Anforderungen, bestehende Gebäude auf dem Rechner in geeigneter Form zur Verfügung zu haben. Oft liegen die Planunterlagen, soweit überhaupt vorhanden, nicht in der Qualität vor, um sie als Grundlage für die Gebäudeaufnahme heranzuziehen.
Es bleibt dann nur die Möglichkeit, die Gebäude auszumessen. Dazu werden heute im wesentlichen die klassischen Aufmaßmethoden benutzt.
Die direkte Übernahme der Maße in digitaler Form ist Stand der Technik. Dabei handelt es sich allerdings nur um eine unwesentliche Vereinfachung im organisatorischen Bereich. Die Aufbereitung der Meßpunkte zu verwendbaren Zeichnungen muß nach wie vor von Hand erfolgen. Ein weiterer Nachteil der bekannten Methode ist, daß von vornherein festgelegt werden muß, was in die Messung einbezogen werden soll. Erweiterungen der Unterlagen bedürfen einer neuen Begehung und Messung. Dies ist insofern problematisch, da bestimmte Räume nur unter aufwendigen Vorbereitungen und intensiven Nacharbeiten zugänglich gemacht werden können, wie dies zum Beispiel bei einem Operationssaal einer Klinik der Fall ist.

Ansätze, Meßdaten automatisch in 3 D-Modelle umzuwandeln und diese auf einem Computer vorort zu überprüfen, bringen keine spürbaren Verbesserungen.

Fotogrammetrische Aufnahmeverfahren werden heute für die Vermessung von komplexen Fassaden oder Anlagen eingesetzt. Die Umwandlung der Fotos in digitale Informationen macht große Schwierigkeiten und bedarf einer Menge Handarbeit. Die automatische dreidimensionale Verarbeitung konnte bisher noch nicht verwirklicht werden.

Die Aufwands- und Kostensitutation verhindert ein großflächiges Aufmessen und digitales Archivieren bestehender Gebäude.
Der Informationsgehalt ist gering, es sind in der Regel nur die Rohbaudaten erfaßt. Materialien, Farben, Beläge, Einbauten, Haustechnik und Möblierung sind im genannten finanziellen Spielraum nicht erfaßbar.

Grundsätzlich kann man davon ausgehen, daß die komplette digitale Erfassung eines Gebäudes, soweit dies überhaupt noch möglich ist, in Kostengrößenordnungen kommt, die der ursprünglichen Planung entprechen.

Aus der DE 36 32 450 A1 ist eine Vorrichtung zur Ermittlung der Abmessungen eines Gegenstandes auf fotografischem Wege bekannt, bei der eine Fotografie des Gegenstandes zusammen mit einem Maßraster hergestellt und während der Aufnahme ein schräg von oben einfallendes Muster aus horizontal verlaufenden Linien auf den Gegenstand projiziert wird, bei der das Maßraster mittels eines Projektors und eines das Maßraster aufweisenden Diapositivs direkt auf die Bildebene bzw. den Film projiziert wird.

Dieses Maßraster ist immer abhängig von einem Maß, das unmittelbar an dem zu vermittelten Gegenstand angebracht wird, so daß eine individuelle Messung im dreidimensionalen Bereich nicht möglich ist.

Aus der DE 36 42 051 A1 ist ein Verfahren zur dreidimensionalen Informationsverarbeitung und eine Vorrichtung zum Erhalten einer dreidimensionalen Information über ein Objekt bekannt. Es wird hier beschrieben, daß eine Vorrichtung, die ein dreidimensionales Verfahren zur Informationsverarbeitung anwendet, ein erstes optisches System umfaßt, eine Projektionseinrichtung, ein zweites optisches System und einen Bildempfänger. Bei dieser Vorrichtung werden Bildmusterstrahlen in einer Vielzahl durch das erste optische System auf ein Objekt geworfen. Von den Bildmusterstrahlen am Objekt erzeugte optische Bilder werden durch das zweite optische System hindurch vom Bildempfänger empfangen, um die Orte der empfangenen optischen Bilder zu erfassen. Die Abstände von den erfaßten Stellen der optischen Bilder zu einer Vielzahl von Stellen am Objekt werden gemessen, womit man eine dreidimensionale Information über das Objekt erhält.

Es soll mit dieser Vorrichtung eine genaue Messung ohne Rücksicht auf die Art der Objekte durchgeführt werden und eine dreidimensionale Information über ein Objekt sowie ein Abstand zu einer willkürlichen Stelle eines Objekts in einer relativ kurzen Zeitspanne erhalten werden. Auch bei dieser Verfahrensweise wird stets eine Lichtquelle benötigt, die das Objekt bestrahlt.

Ebenso wird hier eine Vielzahl von Bildmusterstrahlen auf ein Objekt gerichtet, was, wie eingangs schon erläutert, als nachteilig anzusehen ist.

Aus der DE 28 33 069 A1 ist ein Lasermeßsystem bekannt, das zur Messung der Oberflächenkonturen eines Objektes mit einer einen schmalen Lichtstrahl erzeugenden Lichtquelle dient. Das Lasermeßsystem umfaßt ein Abtastmittel mit einem sich über das Objekt bewegenden Abtaststrahl, eine Linse, um Licht des vom Artikel reflektierten Abtaststrahls zu sammeln und das gesammelte Licht auf ein optisches Gitter zu fokussieren, welches abwechselnd durchsichtige und undurchsichtige Streifen besitzt, und einen Lichtfühler zum Empfang gesammelten, durch die transparenten Streifen des optischen Gitters gelaufenen Lichts und zur Erzeugung einer Ausgangsgröße, die sich dementsprechend ändert.

Dieses Lasermeßsystem stellt eine an sich bekannte, konventionelle Vermessungstechnik dar, mit der ein Objekt bei langsamer Geschwindigkeit, verglichen mit der Abtastrate bewegt wird, so daß eine dreidimensionale Messung der Kontur der Oberfläche des Artikels erhalten werden kann.

Aus der DE 31 24 945 A1 ist ein Registriertheodolit beschrieben, der als Aufzeichnungseinrichtung eine Videokamera aufweist, an die ein Videorecorder mit Zeitlupe und Standbildwiedergabemöglichkeit angeschlossen ist. Mit einem derartigen Theodoliten ist es möglich, sofort nach der Messung eine Aussage über ihre Güte zu treffen oder eventuelle Fehler jederzeit an einem Kontrollmonitor sichtbar zu machen, so daß bei der Auswertung zu jedem Zeitpunkt eine Korrektur erfolgen kann. Jedoch ist auch hier lediglich das Problem behoben, eventuell vorhandene Nachführfehler bei der Auswertung zu jedem Zeitpunkt korrigieren zu können, so daß die herkömmlichen Wachspapiere zur Aufzeichnung entfallen können. Eine dreidimensionale Vermessung nebst Dokumentation des Meßergebnisses kann mit dieser Verfahrensweise nicht vollzogen werden.

Aus der US-A-4 396 942 ist ein Vermessungs- und Dokumentationssystem bekannt, mit dem die räumliche Geometrie und Struktur von dreidimensionalen Objekten optisch erfaßt werden kann. Mit dem beschriebenen System ist jedoch weder eine Zuordnung des erfaßten Objekts zur örtlichen Topographie noch eine Materialerkennung möglich.

Aus der WO-A- 8910538 ist ein Vermessungssystem für Räume und Fassaden bekannt, das ein Laserentfernungsmeßgerät und einen mit dem Laser fest verbundenen Theodoliten umfaßt. Bei diesem System sind jedoch alle Punkte händig anzumessen und eine Kopplung mit dem Videogerät ist nicht möglich. Eine Erfassung von Reflexionsgraden der Wände ist nicht möglich.

Der aufgezeigte Stand der Technik weist die Gemeinsamkeit auf, daß eine effiziente dreidimensionale IST-Aufzeichnung und eine Dokumentation des zu vermessenden Objekts nicht möglich ist. Den digital erfaßten Meßwerten können keine optisch erfaßten Informationsgehalte zugeordnet werden, so daß gegebenenfalls nicht erfaßte Formgebungen, was unter Umständen erst später erkannt wird, nachträglich nur durch erneute Ortsbegehung und Vermessung erfaßt werden können.

Der vorliegenden Erfindung liegt daher die Aufgabe zugrunde, ein Verfahren und eine Vorrichtung zu schaffen, das bzw. die auf dem Konzept der Kopplung einer laserunterstützten Entfernungsmeßmethode (z.B. Laserscann-Methode) mit Videobildaufzeichnungen beruht. Dadurch wird der digital gespeicherte Meßpunkt (Entfernung und Winkel) auf dem Videobild als Lichtpunkt sichtbar. Die Auswahl der Videobilder, die den Raum dokumentieren, erfolgt schematisch durch Drehen der Kamera um den vorgegebenen Winkel. Die Auswahl der Bildsegmente, in deren Mitte je ein Meßpunkt liegt, erfolgt intelligent (programmgesteuert) in Abhängigkeit von Material und Geometrie (Topologie). Aus diesen Daten wird mit Hilfe eines Computerprogramms ein räumliches Rastermodell berechnet, das sowohl die Raumgeometrie als auch die Materialien beinhaltet. Dieses Rastermodell ist mit einem weiteren Computerprogramm in ein Vektormodell zu überführen.

Alle Daten werden an ein CAD-Programm angebunden. Zur Unterstützung der Dokumentation sind den Bildern zugeordnete Sprachaufzeichnungen vorgesehen.

Das erfindungsgemäße Verfahren und die Vorrichtung zur Durchführung dieses Verfahrens beschreiben ein Vermessungskonzept, das mit geeigneter Hardware die optischen Informationen ergänzt, und offensichtliche Tatsachen in Sprachform bei der Dokumentation von Räumen, Fassaden und Gebäuden aufzeichnet. Diese optischen Daten werden, in später beschriebener Art und Weise, digitalen Meßwerten wie Entfernungen und Winkeldifferenzen zum Standpunkt zugeordnet.

Das so entstandene hybride (digital und analog) Informationskonglomerat beschreibt Räume, Fassaden und Gebäude in der gleichen vollständigen Form, wie sie ein Betrachter erlebt.

Mit geeigneter Software ist es möglich, die hybriden Daten so zu bearbeiten, daß für die Planung verwertbare, reine digitale Modelle entstehen. Viele Anwendungen im Bereich des raum- oder fassadenbezogenen Objektmanagements benötigen derzeit keine digitalen Modelle, es reichen als Entscheidungsgrundlage definierte Abbilder (analog) der Räume oder Fassaden.

Gegenüber den herkömmlichen Vermessungskonzepten werden mit der vorliegenden Erfindung folgende Vorteile erzielt:

Es ist eine komplette Erfassung des gesamten Raumes mit allen sichtbaren Objekten möglich.

Es erfolgt eine Erfassung der Farben und Materialien (soweit sichtbar).

Es ist keine vorherige Bestimmung des Vermessungsumfanges nötig.

Es muß keine Nachmessung vorgenommen werden.

Es ist die direkte Zuordnung von nicht optisch erfaßbaren Informationen durch Sprachkommentare möglich.

Es ist eine automatische Rundumerfassung mit sofortiger Erfolgskontrolle gewährleistet.

Gegenüber den herkömmlichen Vermessungskonzepten liegt eine Kosten- und Arbeitsintensitätseffizienz vor.

Es wird eine vollständige Dokumentation großer und komplexer Gebäude mit Vertretbarem Aufwand ermöglicht.

Die vorliegende Erfindung kann grundsätzlich bei allen Gebäuden und Anlagen für die Innenraum-und Außenaufnahmen eingesetzt werden.

Ihre Anwendung bietet sich aber ganz besonders bei großen und größten Objekten an, bei denen die vorhandenen Pläne in einem unbrauchbaren Zustand bzw. nicht mehr vorhanden sind. Komplexe Raumsituationen und umfangreiche Einbauten in Form von Haustechnik, Anlagen oder Maschinen sind genauso wirtschaftlich dokumentierbar wie hochwertig ausgestattete oder denkmalgeschützte Gebäude. Beispielhafte Einsatzmöglichkeiten sind zum Beispiel die Vermessung und Dokumentation von Kliniken, allgemeine Industrieanlagen, chemische Anlagen, Kraftwerke, Bürogebäude, Kaufhäuser, Banken und Ingenieurbauwerke (Brücken, Tunnels, Dämme).

Das Aufnahmeequipment setzt sich aus fünf Hauptkomponenten zusammen.
Diese sind das Meßsystem, das Aufzeichnungssystem, das Justiersystem, die Steuereinheit und das fahrbare Trägersystem.

Das Meßsystem besteht aus einer Videokamera, einem Entfernungs- und Winkelmeßgerät mit Ziellaser oder Laserscanner, einem Mikrofon für Sprachaufnahme sowie einem Spektral- und Reflexionssensor für Farb- und Materialerkennung.

Das Aufzeichnungssystem besteht aus einer Bildplatte oder Videorecorder für Fernsehstandbilder, einem Computer für Maß-, Winkel-, Farb- und Koordinationsinformationen sowie einem DAT- oder Audio-Recorder für Sprachkommentar.

Das Justiersystem wird aus einem Kompaß oder Navigationsgerät für die Richtung des ersten Bildes, einer automatischen Horizontalausrichtung und einer Dreh- und Neigungsvorrichtung mit automatischem Winkelgeber gebildet.

Die Steuereinheit besteht bevorzugterweise aus einem Computer mit Steuersoftware (Echtzeitverarbeitung) und Steuerungen für Kamera, Ziellaser und Bildaufnahmen.

Das fahrbare Trägersystem wird bevorzugterweise aus einem Rollwagen, einem Stativ mit Hubvorrichtung, einer Ablage, einer autarken Stromversorgung, sowie einer Treppengangvorrichtung gebildet.

Ohne Berücksichtigung intelligenter Meßpunktauswahl durch Entfernungsvergleich oder Spektral- und Reflexionsanalyse läuft die Innenraumaufnahme nach folgendem Schema ab:
a) Der Rollwagen wird vom Bediener in den zu vermessenden Raum geschoben, an einen Platz gestellt, von dem aus möglichst der ganze Raum in Rundumsicht eingesehen werden kann, und grob nach Norden (Anzeige über Hilfskompaß) ausgerichtet.
b) Das Meßsystem richtet sich automatisch für das erste Bild horizontal und exakt nach Norden aus.
c) Der Ziellaser fixiert den Mittelpunkt des ersten Bildsegmentes aus seiner Bildsegmentmatrix.
d) Die Videokamera stellt sich auf diesen Punkt scharf und nimmt ein Bild auf, das auch den Zielpunkt (Lichtpunkt) des Ziellasers für die Entfernungsmessung bzw. des Laserscanners enthält.
e) Entfernungs, Horizontal- und Vertikalwinkel werden gemessen und vom Computer gemeinsam mit der Bildkennung (laufende Nummer) aufgezeichnet.
f) Der Ziellaser fixiert den Mittelpunkt des nächsten Bildsegmentes an, dann laufen die Operationen d und e ab. Die Operation f wiederholt sich für jedes Bildsegment der Bildsegmentmatrix.
g) Die Kamera mit aufgesetztem Entfernungs- und Winkelmeßsystem dreht um einen bestimmten, einstellbaren Winkel horizontal weiter. Für jeden Winkel laufen die Operationen c bis f wie beschrieben ab.
h) Zur Ermittlung der relativen Lage zweier Räume zueinander wird im Durchgang eine Reflexionskugel so angebracht, daß sie von beiden Standpunkten aus sichtbar ist. Diese Kugel wird mit dem Ziellaser fixiert, Entfernung und Winkel gemessen und ein Videobild aufgenommen.

Jede Bildeinstellung (Winkel der Videokamera) wird in eine Anzahl von Bildsegmenten zerlegt (Bildsegment Matrix).

Der Zielpunkt für die Entfernungsmessung ist der Mittelpunkt eines Bildsegmentes.

Die Entfernungseinstellung der Kamera wird mit dem Entfernungslaser gekoppelt, so daß das jeweils betrachtete Bildsegment im aufgenommenen Gesamtbild immer am Meßpunkt (Mittelpunktbildsegment) scharf ist.
Je kleiner die Bildsegmente gewählt werden, d.h. je mehr Bildsegmente und damit Meßpunkte vorhanden sind, um so höher ist die Wahrscheinlichkeit, daß alle für die spätere, digitale Auswertung notwendigen Maße aufgenommen worden sind.

Die Entscheidung, in wieviele Bildsegmente ein Gesamtbild zu zerlegen ist, kann von der Steuersoftware für jedes Bild einzeln getroffen werden.

Ein Kriterium ist die Anzahl der unterschiedlichen ermittelten Entfernungen. Je mehr unterschiedliche Entfernungen ermittelt wurden und je größer die Differenz zwischen den einzelnen Entfernungswerten ist, um so mehr Segmente und damit Meßpunkte sind einzubeziehen.

Eine weitere Möglichkeit für die Steuerung der Segmentaufteilung ist die Spektral- und Reflexionsanalyse der im Bildbereich liegenden Materialien. Mit dieser Methode sind leicht unterschiedliche Materialien zu erkennen. Die Segmenteinteilung kann dann so gestaltet werden, daß Flächen gleichen Materials in unterschiedliche Segmente eingeteilt werden. Drei Meßpunkte auf einer Fläche ergeben die Lage im Raum.
Weiterhin kann eine Segmentaufteilung an Materialgrenzen erfolgen, da Materialgrenzen in der Regel auf geometrische Übergänge hindeuten.

Die Spektral- und Reflexionskennwerte werden zu den Meßpunkten gespeichert und dienen später zur Unterstützung der Bildauswertung.

Für die spätere Auswertung müssen bei der Aufnahme soviel Meßinformationen wie nur möglich ermittelt werden. Dazu werden bei der einfachsten Anwendungsform an die zu vermessenden Objekte (Fenster, Türen, Möbel, sonstige Einbauten) gut sichtbar horizontale und vertikale Meßlatten angelegt. Diese werden mit aufgenommen und lassen sich später optisch oder automatisch auswerten.
Für die automatische Auswertung ist es wichtig, daß diese Meßlatten markante Farben haben, um von den Bildverarbeitungsprogrammen automatisch erkannt zu werden.

Eine weitere Möglichkeit, mit einer Aufnahme mehr Maße zu erhalten, ist die Einblendung eines Meßgitters. Das Meßgitter kann sowohl in einer analogen Form, so daß es im Videobild sichtbar ist, als auch in digitaler Form aufgezeichnet werden. Bei der letzten Möglichkeit genügt das Speichern der Aufnahmerandbedingungen wie Objektivbrennweite und Öffnungswinkel. Aus diesen Maßen läßt sich dann nachträglich für die Bildebene des Meßpunktes ein senkrecht zum Kameraobjektiv stehendes Meßraster zurückrechnen und auch in das analoge Bild einblenden.
Zur automatischen Auswertung eignen sich die digitalen Aufnahmerandbedingungen besser als analoge Meßgitter.

Mit der vorliegenden Erfindung werden also Farbvideobilder, Bildkennung (Nummer), Richtungswinkel der Videokamera, Bildsegmentkennung, Abstand zum Bildsegmentmittelpunkt (Meßpunkt), Winkel zum Meßpunkt, Spektral- und Reflexionswert am Meßpunkt (Materialerkennung), Objektivbrennweite und Öffnungswinkel (Meßgitterberechnung) Raumkennzeichnungen und beliebige Texte in Sprache (Audioaufzeichnungen) als Daten erfaßt.

Bevorzugterweise sind alle Daten mit Ausnahme der Farbvideobilder digital aufgezeichnet.
Die Zuordnung der digitalen Daten zu den Videobildern erfolgt über die Bildsegmentkennung.

Die mit der erfindungsgemäßen Gerätekombination, die die Vorrichtung darstellt, aufgenommenen Daten (analog und digital) eignen sich ohne Bearbeitung im Sinne der Bildverarbeitung schon im Rohzustand hervorragend für die Dokumentation von Räumen und Gebäuden.

Aufgrund der Trennung der Videobilder von den digitalen Informationen, aber in Kenntnis der gegenseitigen Abhängigkeit, ist eine Verarbeitung mit herkömmlichen CAD-Systemen ohne aufwendige Zusatzprogrammierung möglich.

Die mit der vorliegenden Erfindung aufgenommenen Videobilder der Räume oder Fassaden eignen sich unter Ausnutzung des Aufnahmerichtungswinkels sehr gut für einen Über- bzw. Rundumblick. Der Standpunkt der Kamera im Raum ist im einfachsten Fall auf einer Grundrißskizze mit einem Pfeil in die Richtung des ersten Bildes (Norden) gekennzeichnet. Durch Identifizieren und Drehen des Pfeiles wird das Bildplattensystem veranlaßt, die entsprechende Raumansicht zu zeigen. Pfeilrichtung und Videobild stimmen überein. Für diese Anwendung ist nicht die komplette Gerätekonfiguration notwendig, die Laserentfernungsmessung, die Bildsegmentierung und die Spektral- und Reflexionsmessung einschließlich der Steuereinheiten können entfallen.

Durch die Einbeziehung von Vektordaten in die Rasterdaten- oder Analogdatenverarbeitung, die hybride Datenverarbeitung, werden bei der vorliegenden Anwendung die ermittelten Entfernungen und Winkel gleichzeitig mit den Bildern ausgewertet. Mit dieser Methode können die Korrektur der Grundrißskizze, die Erzeugung räumlicher Raum-Innenflächenmodelle und die Identifikation, Lage und Größenerkennung von Einbauteilen als Operationen im Vektordatenbereich vorgenommen werden.

Im Gegensatz zur Bildverarbeitung wird hier davon ausgegangen, daß der Anwender aufgrund des Videobildes und des dort eingeblendeten Mischpunktes der Lasermessung über die Brauchbarkeit des Maßes entscheidet.

Die für den Abruf der analogen Videobilder verwendete Grundrißskizze läßt sich mit den Meßwerten für Entfernung und Winkel zu einer maßstäblichen Grundrißzeichnung korrigieren. Der Richtungspfeil für das Abrufen der Videobilder wird nacheinander auf jede Wand in der Grundrißskizze gerichtet. Für jede Wand sind zwei möglichst weit auseinanderliegende Meßpunkte auszuwählen. Mit Hilfe dieser Meßpunkte ist die Richtung und der Abstand der Wand zum Kamerastandpunkt bestimmbar. Eine Wandecke erhält man durch Verschneidung zweier benachbarter Wände.
Wie zuvor erläutert, wird die Brauchbarkeit eines Meßpunktes optisch aufgrund der Videobilder entschieden. Die Übernahme der zugeordneten Daten und die Korrektur der Grundrißskizze erfolgen automatisch.
Für die Berechnung der exakten Lage von Fenster und Türen sind zusätzlich zu den automatisch gesetzten Meßpunkten weitere, von Hand bestimmte Punkte an den Fenster- und Türecken notwendig.

Falls man sich mit einer geringeren Genauigkeit zufrieden geben kann, lassen sich durch Interpolation weitere Punkte zwischen den automatischen Meßpunkten nachträglich ermitteln.

Während bei einer Grundrißzeichnung die Zuordnung der pauschalen Wandhöhe genügt, müssen beim Raum-Innenflächenmodell alle Innenflächen in ihrer vollständigen Geometrie bestimmt werden. Prinzipiell läuft die Auswertung wie zuvor beschrieben ab, es sind allerdings pro Wand drei Meßpunkte zu berücksichtigen, um eine räumlich liegende Fläche zu erhalten. Schon bei der Aufnahme müssen Decken und Fußböden mitgemessen werden, da ohne Meßpunkte eine spätere räumliche Zuordnung nicht möglich ist.

Die Erkennung der Einbau- und Ausstattungsteile erfolgt optisch über das Videobild. Größe und Lage der Teile werden, wie oben beschrieben, aufgrund der Meßpunkte bzw. der Interpolation zwischen den Meßpunkten zugeordnet.

Eine weitere Möglichkeit besteht in der Aufnahme von Vergleichsmaßstäben der optischen Auswertung und Zuordnung zu den Einbau-Ausstattungsteilen.

Das Ziel für dieses Meß- und Dokumentationsverfahren ist die vollständige Ist-Aufnahme von Gebäuden. Dazu zählen, wie schon zuvor erwähnt, nicht nur die Wände, sondern alle sichtbaren Objekte, einschließlich Materialien, Farben und Oberflächen. In der ersten Stufe liefern die Videobilder ebene, farbige Rasterdatenbilder. Hierbei wird in bekannter Weise von der Umsetzung von Videobildern Rasterdaten Gebrauch gemacht.

Unter anderem werden für die geplanten Auswertungen die räumliche Darstellung von Rasterdaten, die Segmentierung von Rasterdaten zu objektorientierten Systemen, die Strukturierung und Erkennung der Rasterobjekte, die Ausblendung von räumlichen Rasterobjekten (Hintergrund sichtbar machen) und der Übergang zum Vektorensystem vorgenommen.

Durch die Kopplung der Entfernungs- und Winkelmessung mit dem Farbvideobild erhält man die exakte, räumliche Lage (Koordinaten) eines Materialbereiches (Bildsegment) innerhalb der gesamten Bildsegmentmatrix.

Unterstützt wird die Materialzuordnung zu einem Bildsegment durch die Ergebnisse der Spektral- und Reflexionsanalyse. Da nicht davon ausgegangen werden kann, daß die Oberfläche oder das Material innerhalb eines Bildsegmentes homogen ist, gelten die Verhältnisse um den Meßpunkt.

Anhand der beigefügten Zeichnungen, die besonders bevorzugte Ausführungsbeispiele der Erfindung zeigen, werden diese nun näher beschrieben.

Dabei zeigen:

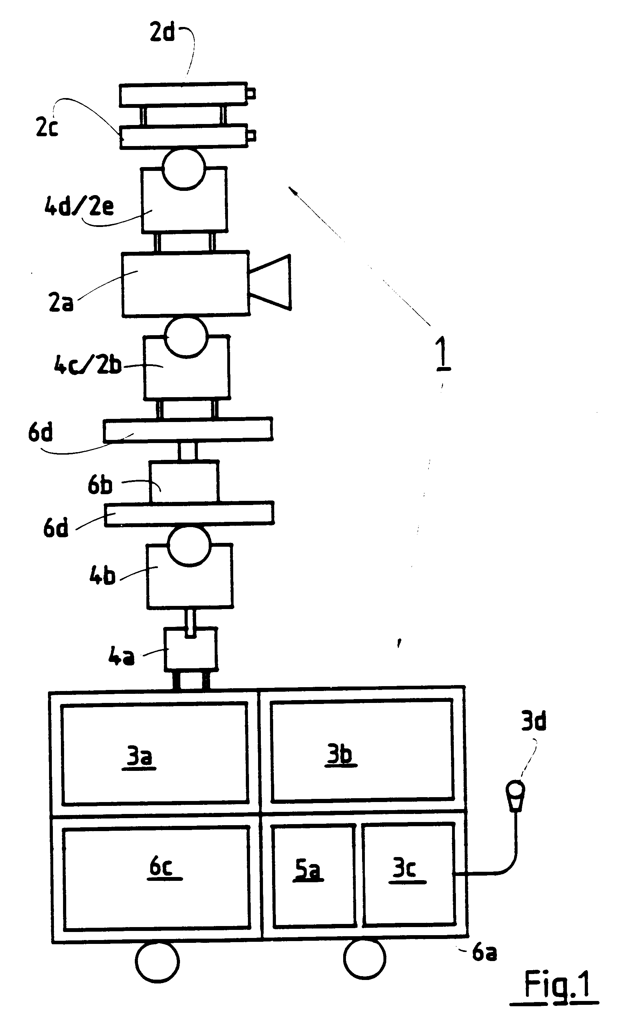

Figur 1 eine schematische Darstellung des Meßaufbaus
Figur 2 ein Systemschaltbild der Erfindung.

Mit dem Bezugszeichen 1 ist die gesamte Vorrichtung gekennzeichnet. Diese besteht aus den Hauptkomponenten Meßsystem 2, Aufzeichnungssystem 3, Justier- und Winkeleinstellungssystem 4, der Steuereinheit 5 und dem Trägersystem 6.

Das Meßsystem 2 zeigt beispielsweise die Komponente Spektral- und Reflexionssensor 2d, der starr mit dem Laserentfernungsmeßgerät 2c verbunden ist, für das alternativ auch ein Theodolit mit Ziellaser eingesetzt werden kann.

Es schließt sich eine Dreh- und Neigungsvorrichtung 4d für das Entfernungsmeßgerät (rechnergesteuert) an.

Mit dem Bezugszeichen 2e ist das Winkelmeßgerät für 2c (horizontal und vertikal, relative Werte zur Videokamera) gekennzeichnet. Hieran schließt sich mit einer starren Verbindung die Videokamera 2a an, die wiederum mittels einer Dreh- und Neigungsvorrichtung sowie-messung 4c mit dem Winkelmeßgerät 2b für die Videokamera verbunden ist. Die Dreh- und Neigungsvorrichtung 4c ist hier für das gesamte Meßsystem (rechner- oder handgesteuert) eingesetzt.

Es folgt eine starre Verbindung mit der Montageplatte 6d, die auf einem ausfahrbaren Stativ für das Meßsystem aufsitzt an das sich wiederum eine Montageplatte 6d anschließt. Es folgt sodann eine automatische Horizontalausrichtung 4b mit einer Dreh-Vorrichtung und -Messung 4a, also einem Navigationsgerät oder Kompaß, für automatische Nordausrichtung. Im Rollwagen 6a, auf dem die zuvor beschriebenen Vorrichtungselemente starr verbunden sind befindet sich der Videorecorder 3a, (alternativ) ein Bildplattensystem für Einzelbildaufzeichnung und der Rechner mit Speichereinheit (z.B. Magnetplatte oder Optical Disc). Ferner ist mit dem Bezugszeichen 6c die Stromversorgung (Akku und Ladegerät), mit dem Bezugszeichen 5a ein Rechner und Wandler (erhält Daten von 3b) und mit dem Bezugszeichen 3c ein Audiorecorder oder DAT-Tape mit Mikrofon 3d für Sprachaufzeichnung gekennzeichnet.

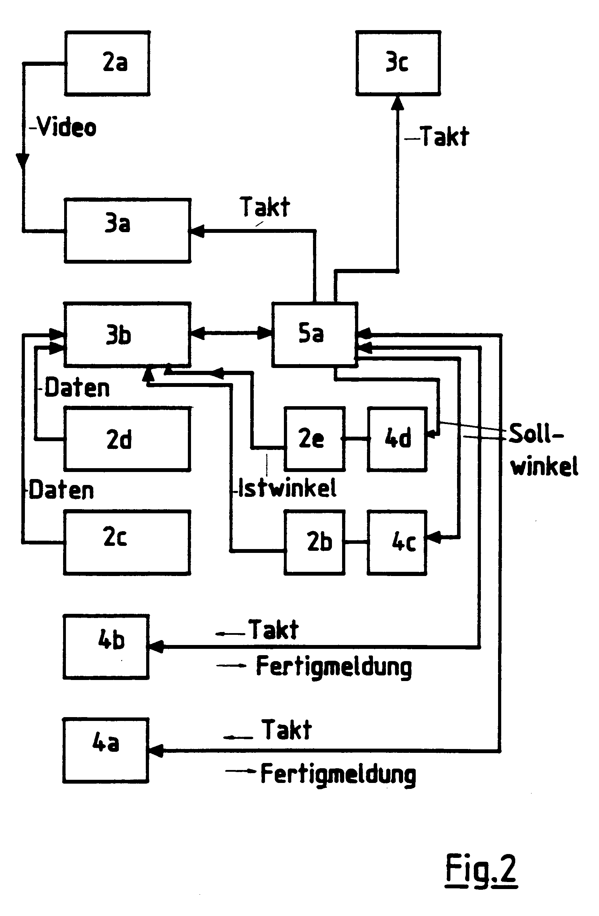

Der Informationsfluß kann aus dem Systemschaltbild der Figur 2 ohne weitere Erklärung entnommen werden.

### Bezugszeichenliste

- 1: Vorrichtung
- 2: Meßsystem
- 2a: Videokamera
- 2b: Winkelmeßgerät für Videokamera
- 2c: Laserentfernungsmeßgerät/Theodolit mit Ziellaser
- 2d: Spektral- und Reflexionssensor (starr mit 2c verbunden)
- 2e: Winkelmeßgerät für 2c (horizontal und vertikal, relative Werte zur Videokamera)
- 3: Aufzeichnungssystem
- 3a: Videorecorder
- 3b: Rechner mit Speichereinheit (z.B. Magnetplatte oder Optical Disc)
- 3c: Audiorecorder
- 3d: Mikrofon
- 4: Justiersystem
- 4a: Navigationsgerät
- 4b: Horizontalausrichtung (automatisch)
- 4c: Dreh- und Neigungsvorrichtung für gesamtes Meßsystem (rechner- oder handgesteuert)
- 4d: Dreh- und Neigungsvorrichtung für Entfernungsmeßgerät 2c und 2d (rechnergesteuert)
- 5: Steuereinheit
- 5a: Rechner + Wandler
- 6: Trägersystem
- 6a: Rollwagen
- 6b: Stativ
- 6c: Stromversorgung
- 6d: Montageplatte

## Patentansprüche

1. Verfahren zur Vermessung und Dokumentation der Geometrie-, Struktur- und Materialbeschaffenheit von dreidimensionalen Objekten, wie Fassaden und Räumen sowie deren Wände, Einrichtungen und Installationen, mittels optischer Erfassung, wobei den optisch erfaßten Informationen auditive Informationen und digitale Meßwerte zugeordnet werden, dadurch gekennzeichnet,
daß die Datenerfassungsmittel innerhalb des zu vermessenden Raumes positioniert und nach Norden ausgerichtet werden, ein Ziellaser jeweils den Mittelpunkt der einzelnen Bildsegmente auf seiner Bildsegmentmatrix fixiert, eine Videokamera auf diesen Punkt bei Bedarf scharf eingestellt wird oder sich einstellt, und ein Bild aufgenommen wird, das den durch einen Lichtpunkt gebildeten Zielpunkt des Ziellasers für die Entfernungsmessung bzw. des Laserscanners enthält, und die Entfernung(en) sowie Horizontal- und Vertikalwinkel gemessen und von einem Rechner gemeinsam mit dem erzeugten Bild aufgezeichnet wird(werden), wobei die optische Datenerfassung mittels Spektral- und Reflexionssensor und die auditive Datenerfassung mittels Sprachinformation erfolgt.

2. Verfahren nach Anspruch 1 , dadurch gekennzeichnet, daß die digitale Datenerfassung mittels Winkelmeßgerät und Entfernungsmeßgerät erfolgt.

3. Verfahren nach Anspruch 1 oder 2, dadurch gekennzeichnet, daß als Winkelmeßgerät ein Theodolit mit Ziellaser verwendet wird.

4. Verfahren nach einem der Ansprüche 1 bis 3, dadurch gekennzeichnet, daß nach Aufnahme der optischen, auditiven und digitalen Informationen des ersten Bildsegments der Ziellaser den Mittelpunkt des nächsten Bildsegments fixiert und die Datenerfassung vollzogen wird.

5. Verfahren nach einem der Ansprüche 1 bis 4, dadurch gekennzeichnet, daß die Datenerfassungsmittel bzw. die Videokamera um einen bestimmten, einstellbaren Winkel horizontal oder vertikal verdreht, und die Datenerfassung vollzogen wird.

6. Verfahren nach einem der Ansprüche 1 bis 5, dadurch gekennzeichnet, daß zur Ermittlung der relativen Lage zweier Räume zueinander im Durchgang eine Reflexionskugel derart angebracht wird, daß diese von beiden Standpunkten aus sichtbar ist und mit dem Ziellaser fixiert, Entfernung und Winkel gemessen und ein Videobild aufgenommen wird.

7. Verfahren nach einem der Ansprüche 1 bis 6, dadurch gekennzeichnet, daß jede Bildeinstellung in eine Anzahl von Bildsegmenten zerlegt wird.

8. Verfahren nach einem der Ansprüche 1 bis 7, dadurch gekennzeichnet, daß zur Erzielung einer konstanten Scharfeinstellung am Meßpunkt des jeweils betrachteten Bildsegments im aufgenommenen Gesamtbild die Entfernungseinstellung der Videokamera mit dem Entfernungslaser gekoppelt wird.

9. Verfahren nach einem der Ansprüche 1 bis 8, dadurch gekennzeichnet, daß die Anzahl der unterschiedlichen Entfernungen zwischen Objekt und Kamera bzw. Entfernungslaser erfaßt und nach diesen Werten das Gesamtbild in die Bildsegmente zerlegt wird.

10. Verfahren nach einem der Ansprüche 1 bis 9, dadurch gekennzeichnet, daß die Steuerung der Segmentaufteilung mittels der Spektral- und Reflexionsanalyse der im Bildbereich liegenden Materialien erfolgt.

11. Verfahren nach Anspruch 10, dadurch gekennzeichnet, daß die Flächen gleichen Materials in unterschiedliche Segmente eingeteilt werden.

12. Verfahren nach einem der Ansprüche 1 bis 10, dadurch gekennzeichnet, daß die Segmentaufteilung an den Materialgrenzen vorgenommen wird.

13. Verfahren nach einem der Ansprüche 1 bis 12, dadurch gekennzeichnet, daß die Spektral- und Reflexionskennwerte zu den Meßpunkten gespeichert werden.

14. Verfahren nach einem der Ansprüche 1 bis 13, dadurch gekennzeichnet, daß den zu vermessenden Objekten bzw. Einrichtungen oder Installationen horizontale und vertikale Meßlatten gut sichtbar zugeordnet werden.

15. Verfahren nach Anspruch 14, dadurch gekennzeichnet, daß die Meßlatten mit aufgenommen und optisch oder automatisch ausgewertet werden.

16. Verfahren nach einem der Ansprüche 1 bis 15, dadurch gekennzeichnet, daß in das Videobild ein Meßgitter eingeblendet wird.

17. Verfahren nach Anspruch 16, dadurch gekennzeichnet, daß das Meßgitter in analoger Form vorliegt.

18. Verfahren nach Anspruch 16, dadurch gekennzeichnet, daß das Meßgitter in digitaler Form vorliegt.

19. Verfahren nach einem der Ansprüche 1 bis 18, dadurch gekennzeichnet, daß die Aufnahmerandbedingungen wie Objektivbrennweite und Öffnungswinkel gespeichert werden, und aus diesen Daten bzw. Maßen ein für die Bildebene des Meßpunktes, senkrecht zum Kameraobjektiv stehendes Meßraster errechnet und in das analoge Bild eingeblendet wird.

20. Verfahren nach einem der Ansprüche 1 bis 19, dadurch gekennzeichnet, daß mit der Meßeinrichtung folgende Daten erfaßt werden:
a) Farbvideobild
b) Bildkennung
c) Richtungswinkel der Videokamera
d) Bildsegmenterkennung
e) Abstand zum Bildsegmentmittelpunkt
f) Winkel zum Meßpunkt
g) Spektral- und Reflexionswert am Bildsegmentmittelpunkt zur Materialerkennung
h) Objektivbrennweite und Öffnungswinkel zur (Meßgitterberechnung)
i) Raumkennzeichnungen
j) Beliebige Texte in Sprache zur (Audioaufzeichnung)

21. Verfahren nach Anspruch 20, dadurch gekennzeichnet, daß die Daten gemäß der Merkmale b) bis j) digital aufgezeichnet werden.

22. Verfahren nach Anspruch 20, dadurch gekennzeichnet, daß die Zuordnung der digitalen Daten zu den Videobildern über die Bild- bzw. Bildsegmentkennung folgt.

23. Verfahren nach einem der Ansprüche 1 bis 22, dadurch gekennzeichnet, daß analog erfaßte Informationen und Meßdaten digitalisiert werden.

24. Verfahren nach einem der Ansprüche 1 bis 23, dadurch gekennzeichnet, daß Vektordaten in eine Rasterdaten- und Analogdatenverarbeitung einbezogen werden, und die ermittelten Entfernungen und Winkel gleichzeitig mit den Bildern ausgewertet werden.

25. Verfahren nach Anspruch 24, dadurch gekennzeichnet, daß mittels der hybriden Datenverarbeitung die Korrektur der Grundrißskizze, die Erzeugung räumlicher Raum-Innenflächenmodelle und die Identifikation, Lage- und Größenerkennung von Einbauteilen als Operationen im Vektordatenbereich vorgenommen werden.

26. Verfahren nach einem der Ansprüche 1 bis 25, dadurch gekennzeichnet, daß dieses mittels einer Software betrieben wird.

27. Vorrichtung zur Durchführung des Verfahrens nach einem der Ansprüche 1 bis 26, bestehend aus einem Meßsystem (2), einem Aufzeichnungssystem (3), einem Justiersystem (4), einer Steuereinheit (5) und einem fahrbaren Trägersystem (6), dadurch gekennzeichnet,
daß das Meßsystem (2) aus einer Videokamera (2a), einem Winkelmeßgerät (2b) für die Videokamera (2a), einem Entfernungsmeßgerät mit Ziellaser bzw. Theodolit mit Ziellaser (2c), einem Spektral- und Reflexionssensor (2d) und einem Winkelmeßgerät (2e) besteht,
daß das Aufzeichnungssystem (3) aus einer Bildplatte oder einem Videorecorder (3a) für Fernsehstandbilder, einem Computer (3b) für Maß-, Winkel-, Farb-, Material- und Koordinationsinformationen sowie einem DAT- oder Audio-Recorder (3c) nebst Mikrofon (3d) für Sprachkommentar besteht, daß das Justiersystem (4) aus einem Kompaß- oder Navigationsgerät (4a) für die Richtung des ersten Bildes, einer automatischen Horizontalausrichtung (4b) und einer Dreh- und Neigungsvorrichtung (4c) für das gesamte Meßsystem und einer Dreh- und Neigungsvorrichtung (4d) für das Entfernungsmeßgerät (2c) besteht, daß die Steuereinheit (5) aus einem Rechner und Wandler (5a) mit Steuersoftware und Steuerungen für Kamera, Ziellaser und Bildaufnahme besteht, und daß das fahrbare Trägersystem (6) aus einem Rollwagen (6a), einem Stativ (6b) mit Hubeinrichtung, Montageplatten (6d), einer autarken Stromversorgung (6c) und einer Treppengangvorrichtung besteht.

## Claims

1. A method of surveying and documenting the geometric, structural and material condition of three-dimensional objects, such as façades and rooms, as well as their walls, equipment and installations, by means of optical recording, wherein the optically recorded data are assigned audio data and digital measured values, characterised in that the data-acquisition means are positioned inside the room to be surveyed and are aligned towards the north, a target laser fixes the respective centre of the individual image segments on its image segment matrix, a video camera is sharply adjusted, where necessary, on to this point or adjusts itself, and an image is recorded which includes the aim point of the target laser for distance measurement and/or of the laser scanner, which aim point is formed by a light spot, and the distance(s) and horizontal and vertical angles are measured and is/are recorded by a computer together with the image formed, the optical data acquisition being carried out by means of spectral and reflection sensors and the audio data acquisition by means of speech information.

2. A method according to Claim 1, characterised in that the digital data acquisition is effected by means of an angle-measuring instrument and a distance-measuring instrument.

3. A method according to Claim 1 or 2, characterised in that a theodolite with a target laser is used as the angle-measuring instrument.

4. A method according to any one of Claims 1 to 3, characterised in that after recording the optical, audio and digital data of the first image segment of the target laser the centre of the next image segment is fixed and the data acquisition is completed.

5. A method according to any one of Claims 1 to 4, characterised in that the data-acquisition means and/or the video camera is rotated horizontally or vertically through a given, adjustable angle and the data acquisition is completed.

6. A method according to any one of Claims 1 to 5, characterised in that to determine the relative position of two rooms with respect to one another a reflection sphere is arranged in the passageway so that it is visible from both viewpoints and is fixed with the target laser, distance and angle are measured and a video image is recorded.

7. A method according to any one of Claims 1 to 6, characterised in that each image setting is broken down into a number of image segments.

8. A method according to any one of Claims 1 to 7, characterised in that to obtain a constant sharp adjustment at the measuring point of the respectively viewed image segment in the recorded overall image the distance setting of the video camera is coupled to the distance laser.

9. A method according to any one of Claims 1 to 8, characterised in that the number of the different distances between the object and the camera and/or distance laser is determined and according to these values the overall image is broken down into the image segments.

10. A method according to any one of Claims 1 to 9, characterised in that the control of the segment division is effected by means of spectral and reflection analysis of the materials lying in the image zone.

11. A method according to Claim 10, characterised in that the surfaces of like materials are divided into different segments.

12. A method according to any one of Claims 1 to 10, characterised in that the division of the segments is carried out at the material boundaries.

13. A method according to any one of Claims 1 to 12, characterised in that the spectral and reflection characteristic values at the measurement points are stored.

14. A method according to any one of Claims 1 to 13, characterised in that horizontal and vertical graduated rods are assigned in a clearly visible manner to the objects and equipment or installations to be surveyed.

15. A method according to Claim 14, characterised in that the graduated rods are also recorded and are evaluated optically or automatically.

16. A method according to any one of Claims 1 to 15, characterised in that a reticule is superimposed on the video image.

17. A method according to Claim 16, characterised in that the reticule is provided in analog form.

18. A method according to Claim 16, characterised in that the reticule is provided in digital form.

19. A method according to any one of Claims 1 to 18, characterised in that the recording boundary conditions, such as lens focal distance and aperture angle, are stored and from these data or values a measuring grid is calculated for the focal plane of the measurement point, which focal point is disposed perpendicular to the camera lens and is superimposed on the analog image.

20. A method according to any one of Claims 1 to 19, characterised in that the following data are acquired with the measuring device:
a) colour video image
b) image identification
c) direction angles of the video camera
d) image segment recognition
e) distance from image segment centre
f) angle to measurement point
g) spectral and reflection values at image centre for material recognition
h) lens focal distance and aperture angle for material recognition
i) room characteristics
j) any texts in language for material recognition.

21. A method according to Claim 20, characterised in that the data are digitally recorded in accordance with features b) to j).

22. A method according to Claim 20, characterised in that the assignment of the digital data to the video images takes place via image or image segment identification.

23. A method according to any one of Claims 1 to 22, characterised in that data and measured data acquired in analog fashion are digitised.

24. A method according to any one of Claims 1 to 23, characterised in that vector data are included in grid data and analog data processing, and the distances and angles determined are evaluated simultaneously with the images.

25. A method according to Claim 24, characterised in that the correction of the ground plan sketch, the creation of three-dimensional room interior surface models and the identification, position and size recognition of components are undertaken as operations in the vector data zone.

26. A method according to any one of Claims 1 to 25, characterised in that it is operated by means of software.

27. An apparatus for carrying out the method according to any of Claims 1 to 26, comprising a measuring system (2), a recording system (3), an adjusting system, a control unit (5) and a mobile support system (6), characterised in that the measuring system (2) comprises a video camera (2a), an angle-measuring instrument (2b) for the video camera (2a), a distance-measuring instrument with target laser and/or theodolite with target laser (2c), a spectral and reflection sensor (2d) and an angle-measuring instrument (2e), in that the recording system (3) comprises a video disc or a video recorder (3a) for television stills, a computer (3b) for measurement, angle, colour, material and co-ordination data, as well as a DAT or audio recorder (3c) together with a microphone (3d) for spoken commentary, in that the adjusting system (4) comprises a compass or navigation instrument (4a) for the direction of the first image, an automatic horizontal alignment (4b) and a rotation and inclination device (4c) for the entire measuring system and a rotation and inclination device (4d) for the distance-measuring instrument (2c), in that the control unit (5) comprises a computer and converter (5a) with control software and control systems for camera, target laser and image recording, and in that the mobile support system (6) comprises a truck (6a), a stand (6b) with an elevating device, mounting plates (6d), a self-contained power supply (6c) and a step means.

## Revendications

1. Procédé pour la mesure et la documentation sur la nature de la géométrie, de la structure et de la matière d'objets en trois dimensions, comme des façades et des pièces, ainsi que leurs murs, des dispositifs et des installations, par acquisition optique, les informations acquises de façon optique étant associées à des informations auditives et des valeurs mesurées numériques, caractérisé en ce que
des moyens d'acquisition de données sont placés à l'intérieur de la pièce à mesurer et sont orientés vers le Nord, un laser de visée fixe respectivement le point central de chacun des segments d'image sur sa matrice de segments d'image, une caméra vidéo est positionnée, ou se positionne, selon les besoins exactement sur ce point, et une image est prise, image qui contient le point de mire, constitué par un point lumineux, soit du laser de visée pour la mesure de distance soit du scanner par laser, et la ou les distances ainsi que l'angle horizontal et l'angle vertical sont mesurés et sont enregistrés par un calculateur en même temps que l'image produite, l'acquisition optique de données étant effectuée au moyen de capteurs spectraux et à réflexion, et l'acquisition auditive de données étant effectuée au moyen d'une information parlée.

2. Procédé selon la revendication 1, caractérisé en ce que l'acquisition numérique de données s'effectue au moyen d'appareils de mesure d'angle et de mesure de distance.

3. Procédé selon la revendication 1 ou 2, caractérisé en ce que l'on utilise comme appareil de mesure d'angle un théodolite avec laser de visée.

4. Procédé selon l'une des revendications 1 à 3, caractérisé en ce que, après avoir prélevé les informations optiques, auditives et numériques du premier segment d'image, le laser de visée fixe le point central du segment suivant d'image et l'acquisition de données est réalisée.

5. Procédé selon l'une des revendications 1 à 4, caractérisé en ce que le moyen d'acquisition de données, ou la caméra vidéo, est tourné, horizontalement ou verticalement, d'un certain angle qui est réglable, et l'acquisition de données est réalisée.

6. Procédé selon l'une des revendications 1 à 5, caractérisé en ce que, pour la détermination de la position relative de deux pièces l'une par rapport à l'autre, on place sur le trajet une sphère de réflexion de telle sorte que celle-ci soit visible des deux points de vue et on la vise avec le laser de visée, la distance et l'angle étant mesurés et une image vidéo étant prise.

7. Procédé selon l'une des revendications 1 à 6, caractérisé en ce que chaque positionnement d'image est décomposé en un certain nombre de segments d'image.

8. Procédé selon l'une des revendications 1 à 7, caractérisé en ce que, pour obtenir un positionnement exact constant au point de mesure du segment d'image respectif considéré dans l'image globale prise, le réglage de distance de la caméra vidéo est couplé au laser de distance.

9. Procédé selon l'une des revendications 1 à 8, caractérisé en ce que l'on acquiert un certain nombre de différentes distances entre l'objet et la caméra, ou le laser de distance, et en ce que l'image globale est décomposée en segments d'image en fonction de ces valeurs.

10. Procédé selon l'une des revendications 1 à 9, caractérisé en ce que la commande de la décomposition en segments est effectuée au moyen de l'analyse spectrale et de réflexion des matériaux se trouvant dans la zone d'image.

11. Procédé selon la revendication 10, caractérisé en ce que les surfaces constituées du même matériau sont décomposées en segments différents.

12. Procédé selon l'une des revendications 1 à 10, caractérisé en ce que la décomposition en segments est effectuée aux limites des matériaux.

13. Procédé selon l'une des revendications 1 à 12, caractérisé en ce que des valeurs caractéristiques spectrales et de réflexion aux points de mesure sont mémorisées.

14. Procédé selon l'une des revendications 1 à 13, caractérisé en ce que des règles graduées horizontales et verticales sont associées, de manière bien visible, aux objets, c'est-à-dire aux dispositifs ou installations, à mesurer.

15. Procédé selon la revendication 14, caractérisé en ce que les règles graduées sont aussi prises dans l'image et qu'elles sont évaluées de manière optique ou automatique.

16. Procédé selon l'une des revendications 1 à 15, caractérisé en ce qu'une grille de mesure est superposée dans l'image vidéo.

17. Procédé selon la revendication 16, caractérisé en ce que la grille de mesure est sous forme analogique.

18. Procédé selon la revendication 16, caractérisé en ce que la grille de mesure est sous forme numérique.

19. Procédé selon l'une des revendications 1 à 18, caractérisé en ce que les conditions limites de prise de vue, comme la distance focale de l'objectif ou l'angle d'ouverture, sont mémorisées, en ce que l'on calcule à partir de ces données, ou mesures, une grille de mesure, pour le plan d'image du point de mesure et perpendiculairement à l'objectif de la caméra, et en ce qu'on le superpose dans l'image analogique.

20. Procédé selon l'une des revendications 1 à 19, caractérisé en ce que l'on acquiert, avec le dispositif de mesure, les données suivantes :
a) image vidéo en couleurs
b) signe d'identification de l'image
c) angle de direction de la caméra vidéo
d) identification des segments d'image
e) distance au point central du segment d'image
f) angle au point de mesure
g) valeur spectrale et de réflexion au point central du segment d'image pour l'identification du matériau
h) distance focale de l'objectif et angle d'ouverture pour le calcul de la grille de mesure
i) caractéristiques de la pièce
j) commentaires parlés, quelconques, pour l'enregistrement audio.

21. Procédé selon la revendication 20, caractérisé en ce que les données selon les points b) à j) sont mémorisées de façon numérique.

22. Procédé selon la revendication 20, caractérisé en ce que l'association des données numériques aux images vidéo est effectuée grâce au signe d'identification de l'image ou du segment d'image.

23. Procédé selon l'une des revendications 1 à 22, caractérisé en ce que les informations et les données mesurées, acquises de façon analogique, sont numérisées.

24. Procédé selon l'une des revendications 1 à 23, caractérisé en ce que des données vectorielles sont intégrées dans un traitement de données de trame et de données analogiques, et en ce que les distances et angles déterminés sont évalués en même temps que les images.

25. Procédé selon la revendication 24, caractérisé en ce que la correction de l'esquisse du plan d'ensemble, la production de modèles, dans l'espace, de surfaces intérieures de la pièce, et l'identification, la reconnaissance de position et de taille d'éléments sont effectuées, au moyen de traitements hybrides de données, sous forme d'opérations dans le domaine des données vectorielles.

26. Procédé selon l'une des revendications 1 à 25, caractérisé en ce que celui-ci est mis en oeuvre au moyen d'un logiciel.

27. Dispositif pour la mise en oeuvre du procédé selon l'une des revendications 1 à 26, consistant en un système de mesure (2), un système d'enregistrement (3), un système de réglage (4), une unité de commande (5) et un système mobile de support (6), caractérisé en ce que,
le système de mesure (2) est constitué d'une caméra vidéo (2a), d'un appareil de mesure d'angle (2b) pour la caméra vidéo (2a), d'un appareil de mesure de distance avec laser de visée, ou théodolite avec laser de visée (2c), un capteur spectral et de réflexion (2d) et un appareil de mesure d'angle (2e),
le système d'enregistrement (3) est constitué d'un disque vidéo ou d'un enregistreur vidéo (3a) pour images immobiles de télévision, d'un ordinateur (3b) pour les informations de mesures, d'angles, de couleurs, de matériaux et de coordination, ainsi que d'un enregistreur audio ou audio numérique DAT (3c) avec un microphone (3d) pour le commentaire parlé ; le système de réglage (4) est constitué d'une boussole ou d'un appareil de navigation (4a) pour l'orientation de la première image, d'un dispositif d'alignement automatique sur l'horizontale (4b) et d'un dispositif de rotation et d'inclinaison (4c) pour l'ensemble du système de mesure et d'un dispositif de rotation et d'inclinaison (4d) pour l'appareil de mesure de distance (2c) ; l'unité de commande (5) est constituée d'un calculateur et d'un convertisseur (5a) contenant des logiciels de commande et des instructions pour la caméra, le laser de visée et le dispositif de prise de vues ; et le système mobile de support (6) est constitué d'un chariot roulant (6a), d'un pied (6b) comportant un dispositif de levage, de plaques de montage (6d), d'une alimentation de courant autonome (6c) et d'un dispositif pour monter un escalier.
